# EUROPÄISCHE PATENTSCHRIFT

(11) **EP 3 133 315 B1**
(45) Veröffentlichungstag und Bekanntmachung des Hinweises auf die Patenterteilung: **04.07.2018**
(21) Anmeldenummer: 16182765.4
(22) Anmeldetag: 11.12.2013
(51) Int. Cl.: F16H 7/12

(54) **GENERATOR - RIEMENSPANNER**
GENERATOR - BELT TENSIONER
TENDEUR DE COURROIE D'ALTERNATEUR

(30) Priorität: 22.02.2013 DE 102013002993
(43) Veröffentlichungstag der Anmeldung: 22.02.2017
(62) Teilanmeldung aus: 13824304.3
(73) Patentinhaber: Schaeffler Technologies AG & Co. KG, 91074 Herzogenaurach (DE)
(72) Erfinder: Wolf, Benjamin, 91094 Langensendelbach (DE); Lorz, Wolfgang, 90766 Fürth (DE)

(56) Entgegenhaltungen:
- EP-A2- 2 557 295
- DE-A1-102011 082 764
- DE-B3-102011 084 680
- US-A1- 2003 109 342
- US-A1- 2003 216 203

## Beschreibung

Die Erfindung betrifft eine Generatoranordnung für einen Nebenaggregate-Riementrieb einer Brennkraftmaschine. Die Generatoranordnung weist einen Generator mit einer Riemenscheibe und einen Riemenspanner auf, der folgendes umfasst:
- einen ersten Spannhebel mit einer ersten Spannrolle,
- einen zweiten Spannhebel mit einer zweiten Spannrolle, wobei die Spannrollen in Umlaufrichtung des Riemens vor und hinter der Riemenscheibe angeordnet sind und den Riemen mit Vorspannkraft beaufschlagen,
- ein zwischen den Spannhebeln eingespanntes Federmittel, das die Spannrollen unter Erzeugung der Vorspannkraft aufeinander zu bewegt,
- und ein Arretiermittel, mittels welchem die Spannhebel relativ zueinander in einer Position arretierbar sind, in der die Spannrollen unter Reduzierung oder Aufhebung der Vorspannkraft voneinander weg bewegt sind.

### Hintergrund der Erfindung

Die EP2557295 offenbart den Oberbegriff des Anspruchs 1. Ein Startergenerator, der im Nebenaggregate-Riementrieb einer Brennkraftmaschine angeordnet ist, bewirkt mit seiner wechselweise Drehmoment aufnehmenden und abgebenden Riemenscheibe, d.h. Generatorbetrieb und Startbetrieb der Brennkraftmaschine, einen dementsprechenden Wechsel von Zugtrum und Leertrum des umlaufenden Riemens. Daher erfordert das Spannen des Leertrums einen Riemenspanner mit zwei Spannrollen, die den Riemen vor und hinter der Riemenscheibe vorspannen.

Bekannte Riemenspanner, wie sie beispielsweise in der DE 199 26 615 A1, DE 10 2008 025 552 A1 und DE 10 2006 019 877 A1 vorgeschlagen sind, weisen jeweils ein am Startergenerator befestigtes Spannergehäuse und zwei beweglich darin gelagerte Spannhebel auf, deren Spannrollen durch ein dazwischen angeordnetes Federmittel aufeinander zu kraftbeaufschlagt sind, um den Riemen zu spannen.

Ein Riemenspanner ist auch aus der DE 10 2011 084 680 B3 bekannt. Dieser Riemenspanner weist einen Spannhebel in Form eines um die Riemenscheibe des Startergenerators verdrehbaren Spannergehäuses mit einer darauf gehäusefest gelagerten Spannrolle auf. In dem Spannergehäuse sind eine Bogenfeder und entgegen deren Federkraft der andere Spannhebel beweglich gelagert. Für eine möglichst einfach durchzuführende Riementriebmontage ist es erforderlich, dass die beiden Spannrollen gegenüber ihrer Betriebsposition voneinander weg bewegt und in dieser beabstandeten Position entgegen der dort stark vorgespannten Feder arretiert sind, um den Riemen bei der Erstmontage ungehindert auflegen oder im Servicefall wechseln zu können. Die gegenseitige Arretierung der beiden Spannhebel erfolgt über einen Sicherungsstift, der dann in miteinander zur Flucht gebrachte Bohrungen im Spannergehäuse und in dem darin gelagerten Spannhebel eingesteckt ist.

### Aufgabe der Erfindung

Ausgehend hiervon liegt der vorliegenden Erfindung die Aufgabe zugrunde, eine Generatoranordnung der eingangs genannten Art und einen Riemenspanner zur Bildung einer solchen Generatoranordnung hinsichtlich der Riementriebmontage zu verbessern.

### Zusammenfassung der Erfindung

Die Lösung hierfür ergibt sich aus den Merkmalen des unabhängigen Anspruchs 1. Demnach soll die Generatoranordnung ein weiteres Arretiermittel umfassen, mittels welchem einer der Spannhebel relativ zum Generator arretierbar ist. Der generatorseitige Teil des weiteren Arretiermittels kann entweder unmittelbar am Gehäuse des Startergenerators oder an einem dazu separaten Bauteil ausgebildet sein, dass am Generatorgehäuse befestigt wird.

Die weitere Arretierung führt zu einer erheblichen Vereinfachung der Riementriebmontage. Dies gilt insbesondere für den Fall, dass der Riemenspanner infolge eines gerissenen Riemens maximal entspannt ist. Dabei ist die Voraussetzung für das ungehinderte Auflegen eines neuen Riemens, dass die Spannhebel gegenseitig in der Position arretiert sind, in der die Spannrollen ausreichend weit voneinander beabstandet sind. Um aber die Spannrollen von der maximal entspannten Position in diese Arretierposition zu bewegen, bedarf es beider Hände des ausführenden Mechanikers, da die beiden Spannrollen nur gleichzeitig voneinander weg in die Arretierposition bewegt werden können - aufgrund der (noch) fehlenden Riemenabstützung würden sonst beide Spannhebel lediglich gemeinsam im Kreis gedreht werden. Und folglich wäre dann ein zweiter Mechaniker erforderlich, der die Arretierung in der beabstandeten Position der beiden Spannrollen setzt.

Die weitere Arretierung hingegen ersetzt die fehlende Riemenabstützung, indem einer der Spannhebel relativ zum Startergenerator drehfixiert wird. Nun kann der Mechaniker mit der ersten Hand den anderen Spannhebel in die Arretierposition drehen und mit der zweiten Hand die Arretierung alleine setzen. Danach kann die weitere Arretierung gelöst werden, um beim Auflegen des neuen Riemens den mit weit beabstandeten Spannrollen blockierten Riemenspanner als Einheit hin und her drehen zu können.

Das oder die Arretiermittel können beispielsweise zu Transportzwecken vollständig an jeder Generatoranordnung oder jedem Riemenspanner ausgebildet sein. Dies muss aber nicht notwendigerweise so sein. Denn das Arretiermittel kann sich auch auf eine geeignete Formgebung an den gegenseitig zu arretierenden Bauteilen beschränken, wobei dann zur Arretierung ein dazu passendes Werkzeug erforderlich ist. Insbesondere sollen ein oder beide Arretiermittel jeweils zwei in eine Arretierposition bewegbare Ausnehmungen oder Bohrungen umfassen, in die in der Arretierposition ein Arretierstift einsetzbar (d.h. noch nicht eingesetztes Werkzeug) oder in jedem Zulieferteil bereits eingesetzt ist.

### Kurze Beschreibung der Zeichnungen

Weitere Merkmale der Erfindung ergeben sich aus der nachfolgenden Beschreibung und aus den Zeichnungen, die eine Prinzipdarstellung und einen ausgeführten Riemenspanner zur Bildung einer erfindungsgemäßen Generatoranordnung zeigen. Sofern nicht anders erwähnt, sind dabei gleiche oder funktionsgleiche Merkmale oder Bauteile mit gleichen Bezugszahlen versehen. Es zeigen:
- Figur 1: die Prinzipdarstellung;
- Figur 2: den Riemenspanner in perspektivischer Vorderansicht;
- Figur 3: den Riemenspanner in perspektivischer Rückansicht;
- Figur 4: den Riemenspanner mit geöffnet dargestelltem Spannergehäuse;
- Figur 5: die Drehlagerung des Riemenspanners am Startergenerator in isolierter Querschnittsdarstellung;
- Figur 6: das Detail A aus Figur 5.

### Ausführliche Beschreibung der Zeichnungen

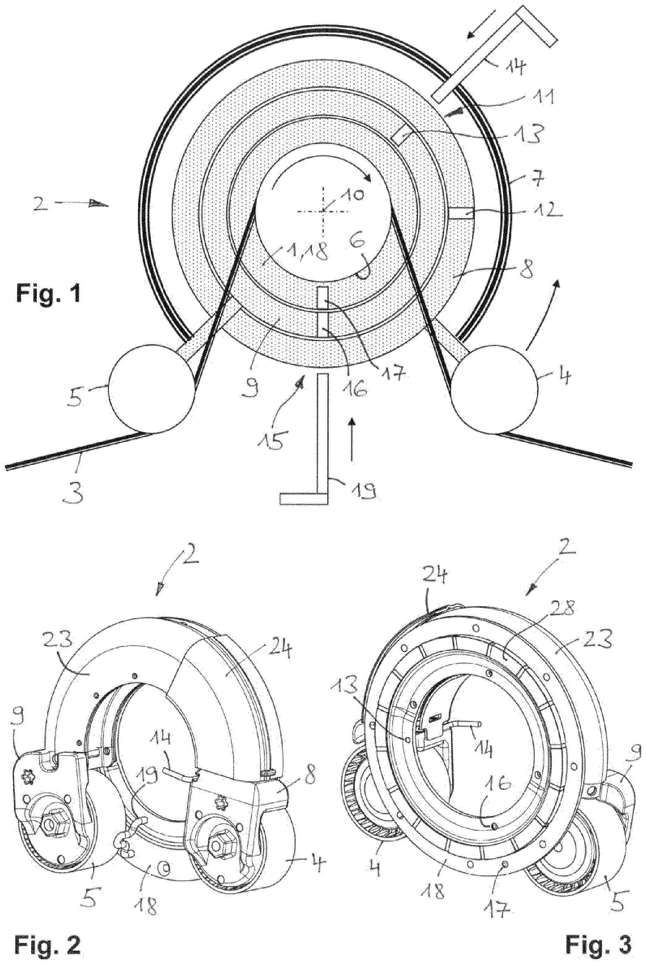

Figur 1 ist eine prinzipielle Darstellung einer erfindungsgemäßen Generatoranordnung für einen Nebenaggregate-Riementrieb einer Brennkraftmaschine. Dabei sind ein Startergenerator 1 und ein frontseitig darauf gelagerter Riemenspanner 2 zu einer Baueinheit zusammengefasst. Da sich bekanntlich die Lage des Zugtrums und des Leertrums im Poly-V-Riemen 3 mit dem Betriebsmodus des Startergenerators 1 ändert, ist der Riemenspanner mit zwei Spannrollen 4 und 5 ausgerüstet, die in Umlaufrichtung des Riemens vor und hinter der Riemenscheibe 6 des Startergenerators angeordnet sind und abwechselnd das momentane Leertrum des Riemens mit Vorspannkraft beaufschlagen. Die Vorspannkraft wird durch ein Federmittel 7 erzeugt, das zwischen zwei Spannhebeln 8 und 9 eingespannt ist, die aufgrund der Federkraft die daran gelagerten Spannrollen aufeinander zu bewegen. Die beiden Spannhebel sind zur Drehachse 10 der Riemenscheibe konzentrisch drehbar gelagert, wobei auch hiervon abweichende Kinematiken ohne Einfluss auf das dargestellte Prinzip existieren.

Der Riemenspanner 2 ist mit einem Arretiermittel 11 ausgestattet, das es ermöglicht, die beiden Spannhebel 8, 9 relativ zueinander in einer Position zu arretieren, in der die Spannrollen 4, 5 unter weitgehender oder vollständiger Entlastung des Riemens 3 voneinander weg bewegt sind. Hierzu wird der erste Spannhebel 8 in der eingezeichneten Relativdrehrichtung im Gegenuhrzeigersinn solange verdreht, bis eine Bohrung 12 im ersten Spannhebel und eine Bohrung 13 im zweiten Spannhebel 9 miteinander fluchten. In dieser Arretierposition wird in die Bohrungen ein Arretierstift 14 eingesetzt, der die beiden Spannhebel mit der Kraft des dort stark vorgespannten Federmittels 7 gegeneinander verspannt.

Beim relativen Verdrehen der beiden Spannhebel 8, 9 in die Arretierposition kann entweder der erste Spannhebel 8 im eingezeichneten Gegenuhrzeigersinn verdreht werden, während sich der zweite Spannhebel 9 mit der zweiten Spannrolle 5 am Riemen 3 abstützt. Umgekehrt kann auch der zweite Spannhebel 9 im Uhrzeigersinn verdreht werden, während sich der erste Spannhebel mit der ersten Spannrolle 4 am Riemen abstützt. Diese Abstützung existiert jedoch bei fehlendem Riemen nicht, der beispielsweise gerissen und abgefallen ist. Für diesen Fall umfasst die Generatoranordnung ein weiteres Arretiermittel 15, das eine Arretierung eines der Spannhebel relativ zum Startergenerator 1 ermöglicht. In dem dargestellten Fall ist der zweite Spannhebel mit einer Bohrung 16 versehen, die in der Arretierposition mit einer Bohrung 17 in einem generatorfesten Bauteil 18 fluchtet. Die weitere Arretierung erfolgt mit einem weiteren Arretierstift 19, der in die Bohrungen 16, 17 eingesteckt wird. In dem so abgesteckten Zustand des zweiten Spannhebels kann ein Mechaniker alleine den ersten Spannhebel mit einer Hand bis zu dessen Arretierposition verdrehen und halten und mit der anderen Hand den Arretierstift 14 einsetzen.

Das generatorfeste Bauteil 18 kann das Gehäuse des Startergenerators 1 sein oder ein am Startergenerator befestigtes Verbindungselement, das den Riemenspanner 2 drehbar am Startergenerator haltert, wie es in dem weiter unten erläuterten Ausführungsbeispiel der Fall ist. Alternativ zu der Darstellung kann das weitere Arretiermittel anstelle der Bohrung 16 im zweiten Spannhebel 9 auch eine Bohrung im ersten Spannhebel 8 umfassen. In diesem Fall wäre dann der erste Spannhebel relativ zum Startergenerator arretiert, so dass zur Arretierung der beiden Spannhebel miteinander der zweite Spannhebel im Uhrzeigersinn in die Arretierposition verdreht werden müsste.

Die das weitere Arretiermittel 15 bildenden Bohrungen 16, 17 sind so zueinander positioniert, dass sie bei stillstehendem Riementrieb und bei dann über seiner gesamten Länge gleichmäßig gespanntem Riemen 3 zumindest in der Nähe ihrer Arretierposition stehen. Das bewirkt, dass sich die Bohrungen 16, 17 beim Abstellen der Brennkraftmaschine und sich vergleichmäßigenden Riementrumkräften selbstständig in Richtung ihrer Arretierposition aufeinander zu bewegen, so dass der zweite Spannhebel 9 ohne großen Verdrehaufwand am Startergenerator 1 bzw. an dem generatorfesten Bauteil 18 abgesteckt werden kann.

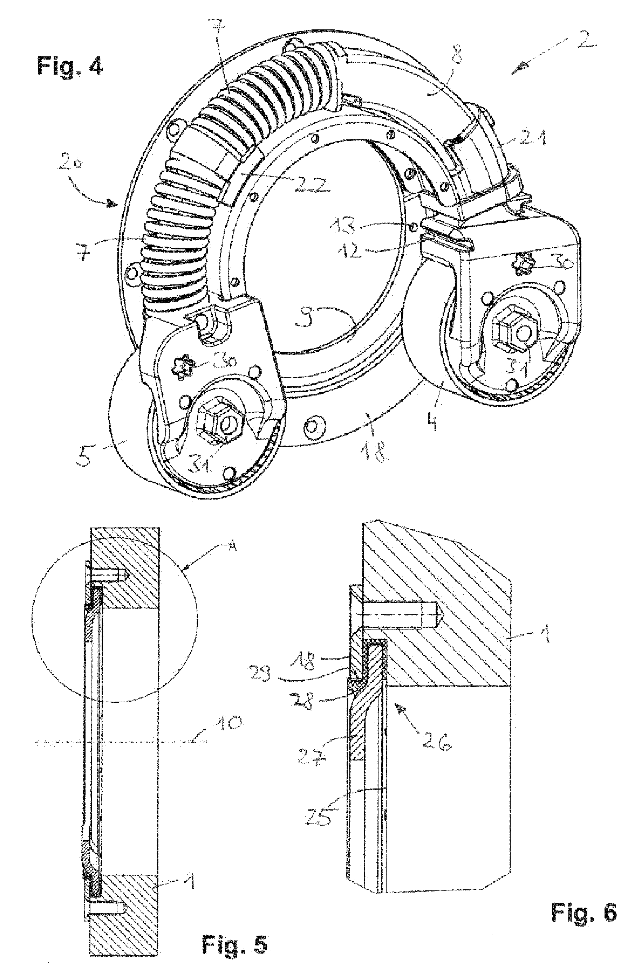

Wie in Figur 1 ist der in den Figuren 2 bis 4 dargestellte Riemenspanner 2 zur frontseitigen Montage auf einen hier nicht dargestellten Startergenerator vorgesehen. Der erste Spannhebel 8 ist als kreisbogenförmiger Spannarm ausgebildet, der an einem Ende von dem Federmittel 7 in Form von zwei in Reihe geschalteten Bogenfedern kraftbeaufschlagt ist und der am anderen Ende die erste Spannrolle 4 lagert. Der zweite Spannhebel 9 bildet ein kreisringförmiges Spannergehäuse mit einer kreisbogenförmigen Kavität 20, in dem die Bogenfedern 7 und das eine Ende des Spannarms 8 in der Ebene des Kreisbogens beweglich gelagert sind. Diese Lagerung erfolgt mittels einer gehäusefesten ersten Lagerschale 21, die den Spannarm umgreift, und einer im Spannergehäuse 9 beweglich gelagerten zweiten Lagerschale 22, die zwischen den beiden Bogenfedern 7 eingespannt ist und (hier nicht erkennbar) einen im Inneren der Bogenfedern verlaufenden Dornfortsatz des Spannarms abstützt. Die zweite Spannrolle 5 ist ortsfest auf dem Spannergehäuse gelagert. Die Kavität ist durch ein in Figur 4 abgenommenes Gehäuseteil 23 verschlossen. Als Spritzschutz der Spannarmlagerung dient eine auf das Gehäuseteil aufgesetzte Kunststoffschale 24.

Wie aus den Figuren 5 und 6 hervorgeht, ist das Spannergehäuse 9 an einer Stirnfläche 25 des Startergenerators 1 konzentrisch zur Generatorachse 10 drehbar gelagert. Dies ermöglicht es, dass bei einem Betriebswechsel des Startergenerators 1 und einem entsprechenden Wechsel von Zugtrum und Leertrum im Riemen 3 das Spannergehäuse 9 mit den Spannrollen 4, 5 um die Generatorachse verschwenkt. Wenn also beispielsweise der Startergenerator 1 vom Starterbetrieb in den Generatorbetrieb wechselt, dann wechselt das Riementrum seitens der ersten Spannrolle 4 von Leertrum auf Zugtrum und seitens der zweiten Spannrolle 5 von Zugtrum auf Leertrum. Folglich führt dieser Betriebswechsel zu einer Verschwenkung des Spannergehäuses aus dem dann aktuellen Zugtrum seitens der ersten Spannrolle heraus in das dann aktuelle Leertrum seitens der zweiten Spannrolle hinein, d.h. bei der in Figur 1 eingezeichneten Umlaufrichtung des Riemens zu einer Verschwenkung im Gegenuhrzeigersinn. Dabei wird die Vorspannkraft im Riemen stets durch die Bogenfedern 7 aufrecht erhalten, die den Spannarm 8 aus dem Spannergehäuse heraus mit Druckkraft beaufschlagen.

Diese Arbeitsweise des Riemenspanners 2, d.h. das spannende Hineinschwenken in das jeweils aktuelle Leertrum bewirkt auch eine sogenannte Entkopplung der rotierenden Startergeneratormasse von der Kurbelwelle der Brennkraftmaschine. Diese Entkopplung übernimmt üblicherweise ein Entkoppler am Generator (z.B. ein Generatorfreilauf) oder an der Kurbelwelle, der bei konventionellen Generatormaschinen ohne Startermodus auf der Generator- bzw. auf der Kurbelwelle angeordnet ist und die vergleichsweise träge rotierende Generatormasse von der Kurbelwelle abkoppelt, wenn deren Drehzahlgradient negativ ist. Das heißt, der erfindungsgemäße Riemenspanner 2 kann auch bei konventionellen Generator-Riementrieben (ohne Startermodus) alternativ oder unterstützend zum Entkoppler verwendet werden.

Die Drehlagerung des Spannergehäuses 9 erfolgt über ein kreisringförmiges Gleitlager 26, das einerseits an der Stirnfläche 25 des Startergenerators 1 und andererseits an dem fest mit dem Startergenerator verbundenen und hier verschraubten Verbindungselement 18 in Form eines Ringflansches anläuft, der das Spannergehäuse am Startergenerator haltert. Das Axial- und Radialkräfte abstützende Gleitlager umfasst einen Teil des Spannergehäuses bildenden Metallring 27, der stirn- und umfangsseitig von einem Lagerring 28 aus Gleitlagerkunststoff ummantelt ist. Die Transportsicherung des Ringflansches 18 bei nicht montiertem Riemenspanner 2 erfolgt über eine Schnappverbindung in Form einer im Lagerring umlaufenden Ringnut 29, in die der Ringflansch mit seinem Innenumfang eingeschnappt ist.

Die Figuren 2 und 3 zeigen den Riemenspanner 2 in vollständig, d.h. doppelt arretiertem Zustand. Der Spannarm 8 ist weitestgehend im Spannergehäuse 9 eingefahren und in dieser Position arretiert. Der gegenseitige Abstand der beiden Spannrollen 4 und 5 ist dabei so groß, dass eine ungehinderte Montage des Riemens 3 in den Riementrieb möglich ist. Das Spannergehäuse ist relativ zum generatorfesten Ringflansch 18 arretiert. Die Arretierung des Spannarms relativ zum Spannergehäuse erfolgt mittels des Arretierstifts 14, der seitens des Spannarms in einer Ausnehmung 12 (siehe Figur 4 ohne Arretierstift) und seitens des Spannergehäuses in der mit der Ausnehmung 12 fluchtenden Bohrung 13 eingesteckt ist. Die weitere Arretierung des Spannergehäuses mit dem Ringflansch umfasst zwei achsversetzte Bohrungen 16 im Spannergehäuse und 17 im Ringflansch und eine darin eingesteckte Sicherungsspange 19.

Das Verdrehen des Spannarms und des Spannergehäuses in die Arretierpositionen kann mittels Standardwerkzeugen bewerkstelligt werden. Hierzu sind die Lagerträger der Spannrollen 4, 5 jeweils mit einem Innentorx 30 und einem Sechskant 31 versehen.

### Liste der Bezugszahlen

- 1: Startergenerator
- 2: Riemenspanner
- 3: Riemen
- 4: erste Spannrolle
- 5: zweite Spannrolle
- 6: Riemenscheibe
- 7: Federmittel / Bogenfeder
- 8: erster Spannhebel / Spannarm
- 9: zweiter Spannhebel / Spannergehäuse
- 10: Drehachse / Generatorachse
- 11: Arretiermittel
- 12: Bohrung / Ausnehmung im ersten Spannhebel
- 13: Bohrung / Ausnehmung im zweiten Spannhebel
- 14: Arretierstift
- 15: weiteres Arretiermittel
- 16: Bohrung / Ausnehmung im zweiten Spannhebel
- 17: Bohrung / Ausnehmung im generatorfesten Bauteil
- 18: generatorfestes Bauteil / Verbindungselement / Ringflansch
- 19: weiterer Arretierstift / Sicherungsspange
- 20: Kavität
- 21: erste Lagerschale
- 22: zweite Lagerschale
- 23: Gehäuseteil
- 24: Kunststoffschale
- 25: Stirnfläche des Startergenerators
- 26: Gleitlager
- 27: Metallring
- 28: Lagerring
- 29: Ringnut
- 30: Innentorx
- 31: Sechskant

## Patentansprüche

1. Generator-Riementrieb einer Brennkraftmaschine, mit einer Generatoranordnung, die einen Generator mit einer Riemenscheibe (6) und einen Riemenspanner (2) aufweist, der folgendes umfasst:
- einen ersten Spannhebel (8) mit einer ersten Spannrolle (4),
- einen zweiten Spannhebel (9) mit einer zweiten Spannrolle (5), wobei die Spannrollen (4, 5) in Umlaufrichtung des Riemens (3) vor und hinter der Riemenscheibe (6) angeordnet sind und den Riemen (3) mit Vorspannkraft beaufschlagen,
- ein zwischen den Spannhebeln (8, 9) eingespanntes Federmittel (7), das die Spannrollen (4, 5) unter Erzeugung der Vorspannkraft aufeinander zu bewegt,
- und ein Arretiermittel (11), mittels welchem die Spannhebel (8, 9) relativ zueinander in einer Position arretierbar sind, in der die Spannrollen (4, 5) unter Reduzierung oder Aufhebung der Vorspannkraft voneinander weg bewegt sind,
wobei der Generator
- entweder ein Startergenerator (1) ist, wobei der Generator-Riementrieb einen am Generator oder an der Kurbelwelle der Brennkraftmaschine angeordneten Entkoppler aufweist, der mit Unterstützung des Riemenspanners (2) die rotierende Startergeneratormasse von der Kurbelwelle entkoppelt,
- oder keinen Startermodus hat,
**dadurch gekennzeichnet, dass** die Generatoranordnung ein weiteres Arretiermittel (15) umfasst, mittels welchem einer der Spannhebel (8, 9) relativ zum Generator arretierbar ist.

2. Generator-Riementrieb nach Anspruch 1, soweit der Generator keinen Startermodus hat, **dadurch gekennzeichnet, dass** der Generator-Riementrieb einen am Generator oder an der Kurbelwelle der Brennkraftmaschine angeordneten Entkoppler aufweist, der mit Unterstützung des Riemenspanners (2) die rotierende Generatormasse von der Kurbelwelle entkoppelt.

## Claims

1. Generator belt drive of an internal combustion engine, having a generator arrangement which has a generator with a pulley wheel (6) and a belt tensioner (2) which comprises the following:
- a first tensioning lever (8) with a first tensioning roller (4),
- a second tensioning lever (9) with a second tensioning roller (5), the tensioning rollers (4, 5) being arranged in front of and behind the pulley wheel (6) in the circulating direction of the belt (3) and loading the belt (3) with a prestressing force,
- a spring means (7) which is clamped in between the tensioning levers (8, 9) and moves the tensioning rollers (4, 5) towards one another with the generation of the prestressing force,
- and a locking means (11), by means of which the tensioning levers (8, 9) can be locked relative to one another in a position, in which the tensioning rollers (4, 5) are moved away from one another with a reduction or cancellation of the prestressing force,
the generator
- either being a starter generator (1), the generator belt drive having a decoupler which is arranged on the generator or on the crankshaft of the internal combustion engine and decouples the rotating starter generator mass from the crankshaft with assistance of the belt tensioner (2),
- or not having have a starter mode,
**characterized in that** the generator arrangement comprises a further locking means (15), by means of which one of the tensioning levers (8, 9) can be locked relative to the generator.

2. Generator belt drive according to Claim 1, insofar as the generator does not have a starter mode, **characterized in that** the generator belt drive has a decoupler which is arranged on the generator or on the crankshaft of the internal combustion engine and decouples the rotating generator mass from the crankshaft with assistance of the belt tensioner (2).

## Revendications

1. Entraînement à courroie d'alternateur pour un moteur à combustion interne, comprenant un agencement d'alternateur qui présente un alternateur avec une poulie à courroie (6) et un tendeur de courroie (2), qui comprend :
- un premier levier tendeur (8) avec un premier galet tendeur (4),
- un deuxième levier tendeur (9) avec un deuxième galet tendeur (5), les galets tendeurs (4, 5) étant disposés dans la direction périphérique de la courroie (3) avant et après la poulie à courroie (6) et sollicitant la courroie (3) avec une force de pré-tension,
- un moyen de ressort (7) serré entre les leviers tendeurs (8, 9), qui déplace l'un vers l'autre les galets tendeurs (4, 5) en générant la force de pré-tension,
- et un moyen de blocage (11) au moyen duquel les leviers tendeurs (8, 9) peuvent être bloqués l'un par rapport à l'autre dans une position dans laquelle les galets tendeurs (4, 5) sont déplacés à l'écart l'un de l'autre en réduisant ou en supprimant la force de pré-tension,
l'alternateur
- étant soit un alterno-démarreur (1), l'entraînement à courroie d'alternateur présentant un découpleur disposé sur l'alternateur ou sur le vilebrequin du moteur à combustion interne, qui désaccouple la masse de l'alterno-démarreur du vilebrequin avec l'assistance du tendeur de courroie (2),
- ou n'ayant pas de mode de démarreur,
**caractérisé en ce que** l'agencement d'alternateur comprend un moyen de blocage supplémentaire (15) au moyen duquel l'un des leviers tendeurs (8, 9) peut être bloqué par rapport à l'alternateur.

2. Entraînement à courroie d'alternateur selon la revendication 1, lorsque l'alternateur n'a pas de mode de démarreur, **caractérisé en ce que** l'entraînement à courroie de l'alternateur présente un découpleur disposé sur l'alternateur ou sur le vilebrequin du moteur à combustion interne, qui désaccouple la masse rotative de l'alternateur du vilebrequin avec assistance du tendeur de courroie (2).
